# EUROPEAN PATENT APPLICATION

(11) **EP 3 366 652 A1**
(43) Date of publication of application: **29.08.2018**
(21) Application number: 17157371.0
(22) Date of filing: 22.02.2017
(51) Int. Cl.: C02F 1/44, B01D 61/14, B01D 61/18, B01D 63/06, B01D 65/02, C02F 1/00, C02F 3/12, C02F 11/04, B01D 29/52, B01D 29/64, B01D 29/66, B01D 37/02, B01D 29/11, C02F 101/30

(54) **FILTERING OF WASTEWATER BY CAKE FILTRATION**

(71) Applicant: Grundfos Holding A/S, 8850 Bjerringbro (DK)
(72) Inventor: Dominiak, Dominik Marek, 94-004 Lodz (PL)
(74) Representative: Plougmann Vingtoft a/s

(57) **Abstract**

The present invention relates to wastewater filtration using one or more through flow hollow tubular members having a fluid penetrable wall being configured for supporting a filtration cake through which the wastewater is filtered. The filtration cake is formed from deposited solids comprised in a blend comprising primary sludge and digester sludge, and optionally activated sludge if available, with a possible addition of coagulating substances.

## Description

### FIELD OF THE INVENTION

The present invention relates to wastewater filtration using one or more through flow hollow tubular members having a fluid penetrable wall being configured for supporting a filtration cake through which the wastewater is filtered. The filtration cake is formed from deposited solids comprised in a blend comprising primary sludge and digester sludge, and optionally activated sludge if available, with a possible addition of coagulating substances.

### BACKGROUND OF THE INVENTION

Wastewater treatment plants are complex installations, built to remove solids, organic substances and nutrients from wastewater to make it fit for returning to nature or reuse. Unfortunately, existing wastewater treatment plants consume large amounts of energy to achieve their objectives. That energy is spent to provide aeration of biomass in the process tanks, dewatering of sludge solids, as well as a number of other operations. Some treatment plants take advantage of anaerobic digestion processes to turn a fraction of organic matter from wastewater into biogas, which can be used to power generators and reclaim some electric energy and heat. However, a vast majority of existing wastewater treatment plants are incapable of covering the plant energy needs with biogas-derived energy, and hence their energy balance is still negative.

The amount of energy that can be recovered from organic substances present in wastewater depends on the efficiency of the pre-treatment processes. These processes include, among others, wastewater screening, which removes large debris and trash, and wastewater clarification, which removes settleable matter. Wastewater clarification, the most widespread wastewater pre-treatment technology, produces the so-called primary sludge, which is directed to anaerobic digester for biogas extraction. The amount of primary sludge is directly linked to the final biogas yield of the process. The organic content of wastewater, which remains after primary clarification, needs to be further removed in aerobic biological processes, which consume energy and generate costs. This means that removing organic matter from wastewater in the pretreatment processes helps both save cost in the subsequent aerobic processes, and recover valuable energy in anaerobic digestion. For that reason, efficient pre-treatment is key to the overall efficiency of the wastewater treatment process.

Several approaches to improved wastewater pre-treatment have been presented. Some wastewater treatment plants improve their pre-treatment efficiencies by dosing coagulants and flocculants into the wastewater prior to clarification to increase settling. This approach however increases the amount of sludge to be finally handled and disposed of. Other plants have introduced dedicated band filters instead of clarification tanks. While these machines offer higher pre-treatment efficiencies than clarification tanks and more compactness, they necessitate the use of chemical coagulants and flocculants, which besides contributing to process costs, increase the production of sludge. Moreover, while the existing solutions are capable of satisfactory retention of suspended organic content of wastewater, they generally perform very poorly with respect to removing the dissolved fraction of organics. Therefore, significant progress on the general wastewater treatment efficiency depends on the introduction of pre-treatment technologies capable of efficiently removing the dissolved fraction of wastewater's organic content.

Hence, an improved treatment of wastewater would be advantageous, and in particular a more efficient and/or reliable filtration of wastewater would be advantageous.

### OBJECT OF THE INVENTION

An object of the present invention is to provide an alternative to the prior art.

In particular, it may be seen as a further object of the present invention to provide a filtration of wastewater that solves the above mentioned problems of the prior art.

### SUMMARY OF THE INVENTION

Thus, the above described object and several other objects are intended to be obtained in a first aspect of the invention by providing a process for filtering wastewater. The process utilizes one or more through flow hollow tubular members having a fluid penetrable wall being configured for supporting a filtration cake on the inside or outside of the wall.

A process according to the invention preferably comprise forming a filtration cake on said inside or said outside of the wall by:
- feeding a blend comprising feeding a blend (16) comprising digester sludge (15) and at least one of primary sludge (14), activated sludge and coagulating substances into the interior of the hollow tubular member(s) or exposing the exterior of said hollow tubular member(s) to said blend, and
- providing a pressure difference between the interior and exterior of the hollow tubular member(s) of sufficient magnitude to provide a permeation out or in through the fluid penetrable wall(s) and a deposition of solids contained in the blend on the inside or on the outside of said wall.

Subsequently to the forming the filtration cake the process preferably comprises
- feeding wastewater into the interior of said hollow tubular member(s) if the filtration cake is formed on said inside, or to surround the exterior of said hollow tubular member(s) if the filtration cake is formed on said outside, where the pressure in the wastewater is higher than the pressure at the exterior or interior of the hollow tubular member(s) to provide a permeation through the filtration cake (12) and the fluid penetrable wall(s) thereby providing filtrate of said wastewater.

The proposed invention offers a significant improvement of pre-treatment efficiency by improving the recovery of organic substances from wastewater prior to its aerobic biological treatment, which results in the increase in biogas yields and decrease in costs associated with the oxidation of organic matter remaining in wastewater after pre-treatment. This is achieved by subjecting the wastewater to filtration through a filtration cake composed of a mixture of different kinds of sludges present at a wastewater treatment plant, namely the primary sludge, digester sludge and activated sludge (if present). Sludge blending enables obtaining the desired properties of the filter cake to improve its physico-chemical and hydraulic properties with respect to filtration. The filtration cake so obtained is capable of removing almost all of the suspended loading of wastewater, while also retaining up to 50% of its dissolved organic content. This creates large savings for the subsequent aerobic treatment, as well as significantly increases the biogas yield of the plant. Moreover, very high removal of organic carbon, combined with passage of certain dissolved phosphorus and nitrogen species, creates opportunities to create new wastewater treatment process layouts employing alternative approaches to secondary treatment, such as biofilm and MBBR processes.

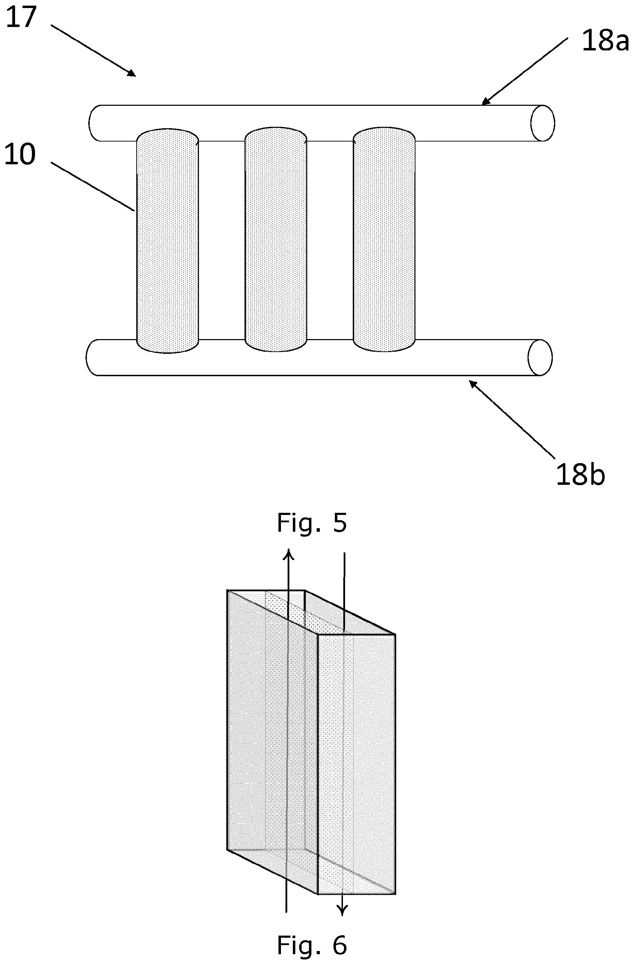

In the present context, terms are used in a manner being ordinary to a skilled person. Some of these terms are elucidated below:
*Through flow hollow tubular member* or in short *hollow tubular member* is typically used to reference a member allowing flow of a liquid through the wall of the member, either outside-in or inside-out. Hollow tubular member is preferably to be construed broadly and thereby also to include a cavity inside which the fluid penetrable wall is arranged, which fluid penetrable wall divides the cavity into at least two cavities, e.g. as illustrated in fig. 6 herein.

*A fluid penetrable wall* being configured for supporting a filtration cake is preferably used to means a wall having through going openings allowing fluid to pass through the wall and arresting solids having a size above a certain, predefined magnitude so as to deposit such solids on the surface of the wall.

*Filtration cake* is preferable used to reference a porous deposition of solids originates from wastewater, the filtration cake is used for filtering.

*Primary sludge* is preferably used to mean a product obtained or obtainable by subjecting wastewater to a clarification process in which the heaviest settleable solid fractions contained in the wastewater settle to the bottom of the clarifier.

*Digester sludge* is preferably used to mean a product obtained or obtainable by biological digestion of primary sludge and surplus activated sludge under anaerobic conditions.

*Activated sludge* (or activated sludge mixed liquor) is preferably used to mean the floccular suspension of biomass maintained in the process tank(s) of a biological wastewater treatment plant, which performs the biological degradation of substances contained in wastewater. Accordingly, *Activated sludge supernatant* is preferably a water phase resulting a settling, centrifugation or in general separation of activated sludge mixed liquor, by separating out e.g. flocs and/or other solid elements contained in the activated sludge mixed liquor. The separation provides an activated sludge mixed liquor bottom fraction, which can be characterised as having a higher concentration of flocs than the unseparated active sludge mixed liquor.

*Fluidic connected* is preferably used to mean that two elements are connected so that fluid may flow from one of the element to the other (or vice versa).

*Fluidic closed* is preferably used to mean that a fluid may not flow out through a position be fluid closed, e.g. an end of a tube or pipe is sealed off.

*Parallel configuration* is preferably used to mean a configuration where all of an in-flux of fluid (including solid matter, if any) is distributed in parallel to the inlets of a number of hollow tubular members;

*Recirculation* is preferably used to mean a process in which a fluid is circulated in a closed loop - this typically involves a tank, a reservoir or the like and in such cases, the recirculation preferably means that the fluid taken from the tank/reservoir fed into a device and flow back into the tank/reservoir.

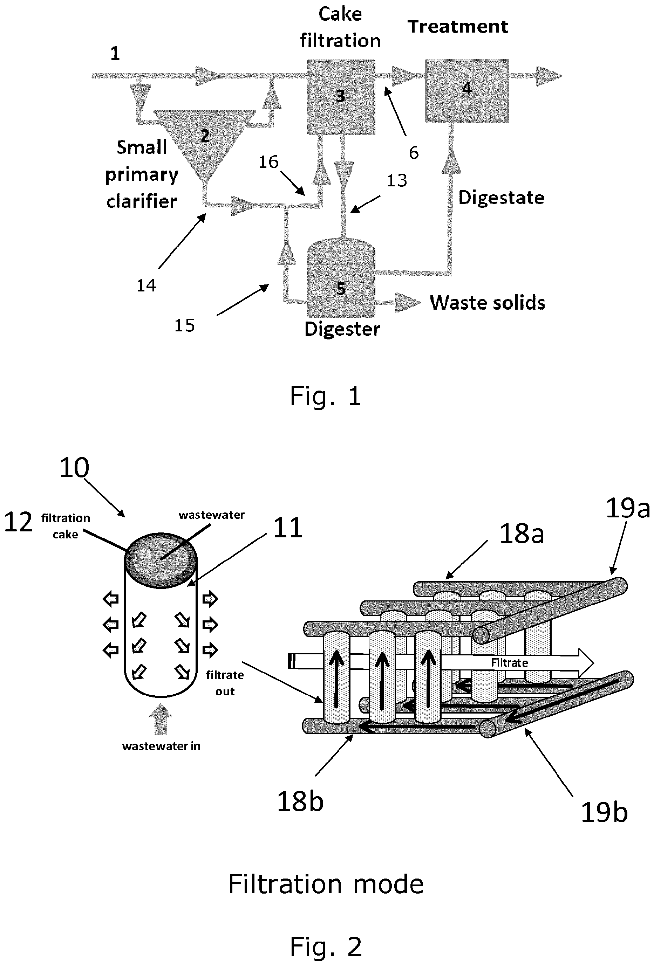

*Wastewater* is preferably used to mean wastewater that has not been subjected to biological and/or chemical treatment; wastewater may comprise a fraction wastewater that has been subjected to a clarification (as illustrated in fig. 1) or all of the wastewater may have been subjected to a clarification. Further, wastewater may have been mechanically filtered to remove larger solids typically being non-biological larger solids, such as stones, rocks, debris or the like.

*Fluid distributor pipes* is used as a general term for a tube than can be used for distributing fluid and collecting fluid; it is noted that depending on how the flow in e.g. an array according to the invention, one of the fluid distribution pipes are used as a distributor for fluid whereas the other is collecting fluid.

*Configured for supporting a filtration cake* is preferably used to means that the structure in question has through going opening allowing fluid to pass through the structure and where the size of the through openings are selected so as to arrest solids having a size above a certain size, such as above 25 micron, such as above 10 micron, preferably above 5 micron.

In preferred embodiments of the process according to the invention, the feeding of said blend and providing said pressure difference may preferably be carried out as separate steps subsequent to each other starting with the feeding of said blend.

Preferably, the feeding of said blend may comprise recirculation of said blend inside or outside the hollow tubular member(s), preferably to uniformly fill or surround the hollow tubular member(s) with said blend.

In preferred embodiments of the invention, the filtration cake may be formed on the inside and the providing of a pressure difference may be provided by feeding the blend into the hollow tubular member(s) at one end thereof and by restricting such as preventing said blend from flowing out of the hollow tubular member(s) at a distal end thereto.

In preferred embodiments of the invention, the filtration cake may be formed on the inside and the process may further comprise feeding the wastewater into the hollow tubular member(s) at one end thereof and restricting such as preventing said wastewater from flowing out of hollow tubular member(s) at a distal end thereto.

Preferably, the blend of primary sludge and digester sludge may be a blend composed of between 30 wt. % primary sludge and 70 wt. % digester sludge and 70 wt. % primary sludge and 30 wt. digester sludge, preferably 50 wt.% primary sludge 50 wt. % digester sludge, where wt. % preferably is the based on the dry matter content.

Preferably, a process according to preferred embodiments of the present invention may further comprise removal of the filtration cake.

In preferred embodiments of the invention, the removal of filtration cake may be provided by providing one or more, or a combination thereof, of:
- back-washing;
- back-pulsing;
- air-sparging;
- cross flow;
- chemical cleaning;
- mechanical removal, such as by scrapping of the filtration cake;

Preferably, a process according to preferred embodiments of the invention may further comprise monitoring the pressure drop across the filtration cake and removing the filtration cake when said pressure drop exceed a preselected level.

In some preferred embodiments of the invention, the process a utilizes at least one array comprising a plurality of said hollow tubular members, in which array said hollow tubular members being fluidic connected at their longitudinal ends to a first fluid distributor pipe to form a parallel configuration, so that fluid may flow into said hollow tubular members at one end thereof via one of the first fluid distributors pipes and out of the hollow tubular member at and end being distal thereto and into the other of the first fluid distributor pipes, or vice versa, and wherein said feeding of said blend or wastewater into the interior of the hollow tubular members may be provided by feeding said blend or wastewater into one of the first fluid distributor pipes.

Preferably, the process according to preferred embodiments of the invention may further comprising during said feeding of said blend, providing an inflow of said blend into the hollow tubular members through one of the first fluid distributor pipes and providing an outflow of said blend out from the hollow tubular members and into the other of the first fluid distributor pipes (18a).

Preferably, the providing of a pressure difference may be provided by providing an inflow of said blend into the hollow tubular members through one of the first fluid distributor pipes and restricting, such as preventing said blend from flowing out from the other of the first fluid distributor pipes.

A process according to preferred embodiments of the invention may further comprise during said feeding of wastewater into one of said first distributor pipes, restricting such as preventing said wastewater from flowing out from the other of the first distributor pipes.

In preferred embodiments invention, the process may utilize a plurality of said arrays, said arrays being fluidic connected in a parallel configuration with
- one of the first fluid distribution pipes of each array being fluidic connected to a single second distributor pipe, and
- another of the first fluid distribution pipes being fluidic connected to another single second distribution pipe,
so that fluid may flow through one of the second distributor pipes and be distributed in the arrays in parallel and collected in the other one of the second distributor pipes, or vice versa, and wherein said feeding of said blend or wastewater into the interior of the hollow tubular members is provided by feeding said blend or wastewater into one of the second fluid distributor pipes.

The blend of primary sludge and digester sludge may preferably further comprise activated sludge and/or coagulants.

The invention relates in a second aspect to a cake filtration device comprising one or more through flow hollow tubular members having a fluid penetrable wall being configured for supporting a filtration cake on the inside or on the outside of the wall.

The cake filtration device may preferably be configured for selectively feeding a blend comprising digester sludge and at least one of primary sludge, activated sludge and coagulating substances, and wastewater into the interior of the hollow tubular member(s) or to expose the exterior of said hollow tubular member(s). This reflects that the cake filtration device is typically used in two mode of operation where prior to filtering, the filtration cake is formed from the solids contained in the blend.

Preferably, the cake filtration device may further be configured for providing a pressure difference between the interior and exterior of the hollow tubular member(s) of sufficient magnitude to provide a permeation out or in through the fluid penetrable wall(s) and a deposition of solids contained in the blend on the inside or on the outside of said wall so as to forming a filtration cake, and a permeation through the filtration cake and the fluid penetrable wall(s) thereby providing filtrate of said wastewater.

Preferably, a cake filtration device according to preferred embodiments of the invention may be configured to carry out the feeding of said blend and providing said pressure difference as separate steps subsequent to each other starting with the feeding of said blend.

Preferably, a cake filtration device according to preferred embodiments of the invention may be configured to recirculating said blend inside or outside the hollow tubular member(s), preferably to uniformly fill or surround the hollow tubular member(s) with said blend.

Preferably, a cake filtration device according to preferred embodiments of the invention may be configured for providing a filtration cake on the inside of the hollow tubular member(s) and the device may be configured for providing of a pressure difference by having an inlet for feeding said blend into the hollow tubular member(s) at one end thereof and by restricting such as preventing said blend from flowing out of the hollow tubular member(s) at a distal end thereto.

Preferably, a cake filtration device according to preferred embodiments of the invention may be configured for providing a filtration cake on the inside of the hollow tubular member(s) and the device may be configured for feeding the wastewater into the hollow tubular member(s) at one end thereof and restricting such as preventing said wastewater from flowing out of hollow tubular member(s) at a distal end thereto.

Preferably, a cake filtration device according to preferred embodiments of the invention may be configured for providing a blend of primary sludge and digester sludge composed of between 30 wt. % primary sludge and 70 wt. % digester sludge and 70 wt. % primary sludge and 30 wt. % digester sludge, preferably 50 wt. % primary sludge 50 wt. % digester sludge, where wt. % is preferably based on dry matter content.

Preferably, a cake filtration device according to preferred embodiments of the invention may further comprise cake removal means comprising one or more, or a combination thereof, of:
- a back-washing device;
- a back-pulsing device;
- an air-sparging device;
- a cross flow device;
- a chemical cleaning device;
- a mechanical remover device, such as a mechanical scrapper;

Preferably, a cake filtration device according to preferred embodiments of the invention may further comprising pressure sensors arranged for monitoring the pressure drop across the filtration cake.

Preferably, a cake filtration device according to preferred embodiments may comprise at least one array having a plurality of said hollow tubular members, in which array said hollow tubular members being fluidic connected at their longitudinal ends to a first fluid distributor pipe to form a parallel configuration, so that fluid may flow into said hollow tubular members at one end thereof via one of the first fluid distributors pipes and out of the hollow tubular member at and end being distal thereto and into the other of the first fluid distributor pipes, or vice versa, and wherein the first fluid distributor pipes preferably may be fluidic closed at one end.

Preferably, a cake filtration device according to preferred embodiments of the invention may be configured for having an inflow of said blend into the hollow tubular members through one of the first fluid distributor pipes and having an outflow of said blend out from the hollow tubular members and into the other of the first fluid distributor pipes.

Preferably, a cake filtration device according to preferred embodiments may further comprise selective flow restricting means, such as controllable valves, arranged to restricted such as prevent fluid from flowing out from one of the first fluid distributor pipes.

Preferably, a cake filtration device according to preferred embodiments of the invention may comprise a plurality of said arrays; said arrays being fluidic connected in a parallel configuration with
- one of the first fluid distribution pipes of each array being fluidic connected to a single second distributor pipe, and
- another of the first fluid distribution pipes being fluidic connected to another single second distribution pipe,
so that fluid may flow through one of the second distributor pipe and be distributed in the arrays and collected in the other one of the second distributor pipes, or vice versa.

In a third aspect the invention relates to an array comprising a plurality of through flow hollow tubular members each having a fluid penetrable wall being configured for supporting a filtration cake on the inside or on the outside of the wall, the array comprising two first fluid distributor pipes wherein the hollow tubular members being fluidic connected at their longitudinal ends to one of the first fluid distributor pipe to form a parallel configuration, so that fluid may flow into said hollow tubular members at one end thereof via one of the first fluid distributors pipes and out of the hollow tubular member at and end being distal thereto and into the other of the first fluid distributor pipes, or vice versa, and wherein the first fluid distributor pipes preferably are fluidic closed at one end.

Such arrays may in preferred embodiments preferably be combined into a plurality of arrays being fluidic connected in a parallel configuration with one of the first fluid distribution pipes of each array being fluidic connected to a single second distributor pipe, and another of the first fluid distribution pipes being fluidic connected to another single second distribution pipe, so that fluid may flow through one of the second distributor pipe and be distributed in the arrays and collected in the other one of the second distributor pipes, or vice versa.

The first, second and third aspects of the present invention may be combined. These and other aspects of the invention will be apparent from and elucidated with reference to the embodiments described hereinafter.

### BRIEF DESCRIPTION OF THE FIGURES

The present invention and in particular preferred embodiments thereof will now be described in more detail with reference to the accompanying figures. The figures show ways of implementing the present invention and are not to be construed as being limiting to other possible embodiments falling within the scope of the attached claim set.
Figure 1 schematically illustrates various steps in treating wastewater and illustrates an example of arrangement of a filtration process and filtration device according to the present invention,
Figure 2 schematically illustrates a cake filtration device according to a preferred embodiment, the cake filtration device is illustrated in a filtration mode of operation, where wastewater filtration through the filtration cake formed on the internal surfaces of the hollow tubular elements; in general wastewater comes in, filtrates comes out (arrows in the cake filtration device indicates internal flow directions),

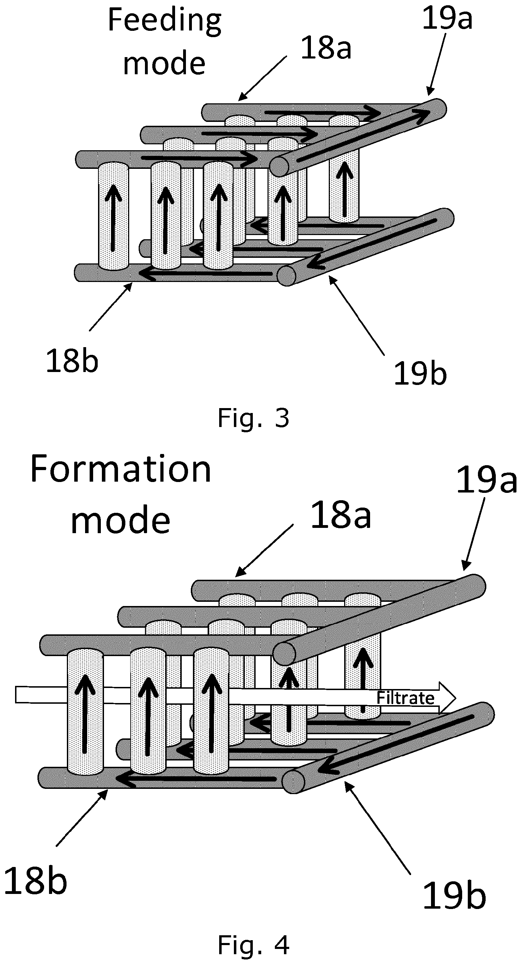

Figure 3 schematically illustrates a cake filtration device according to a preferred embodiment, the cake filtration device is illustrated in a feeding mode of operation, in which recirculation of sludge blend inside the hollow tubular elements to substantially fill them with blend and no filtration occur (arrows in the cake filtration device indicates internal flow directions),
Figure 4 schematically illustrates a cake filtration device according to a preferred embodiment, the cake filtration device is illustrated in a cake formation mode, where the filtration cake is formed on the internal surfaces of the hollow tubular members; in the formation mode, sludge blend enters in the bottom and filtrate permeates out with no sludge recirculation (arrows in the cake filtration device indicates internal flow directions),
Figure 5 schematically illustrates an array of hollow tubular members connected to first distribution pipes at both ends,
Figure 6 schematically illustrates a further embodiment of a hollow tubular member; the hollow tubular member comprising a tubular outer element being fluidic non-penetrable and having a rectangular cross section. The outer hollow tubular member as shown is open for fluid flow (indicated by arrow) at its ends. A fluid penetrable wall is arranged inside (illustrated by the dotted surface) the tubular outer element. During use, fluid to be filtered is fed into the hollow tubular member at one side of the fluid penetrable wall and due to a pressure difference provided across the fluid penetrable wall a filtrate will be produced by fluid permeating/flowing through the fluid penetrable wall;

### DETAILED DESCRIPTION OF AN EMBODIMENT

Reference is made to fig. 1 schematically illustrating various steps in treating wastewater and illustrates an example of arrangement of a filtration process and filtration device according to the present invention. Wastewater 1 enters the wastewater treatment plant and part of that stream is run through a small primary clarifier 2, which produces primary sludge (14) for the cake filtration device 3.

The clarified wastewater from primary clarifier combines again with the main wastewater flow and enters the cake filtration device 3, which pre-treats (by filtration) the wastewater of most of its suspended content and part of its dissolved content and produces a filtered wastewater 6. After that, the filtered wastewater 6 is further treated in the treatment part 4. Primary sludge 14 from the primary clarifier 2 and sludge from the digester 5 are blended in a favorable ratio of dry matter content (dry matter content as weight per volume, e.g. kg dry matter per m³⁾, and used by the cake filtration 3 device to create a filtration cake 12 on a porous support.

In certain preferred embodiments, the favorable ratio is 50:50 in terms of dry matter content weight to weight, but it envisaged that a favorable range for the ration is between 30:70 to 70:30 of primary sludge to sludge from the digester.

The spent cake material 13, containing all the suspended and dissolved substances removed from the wastewater 1, is discharged to the digester 5, where biogas is recovered prior to discharging the waste solids. Digestate from the digester, containing high amounts of ammonia and organics, is treated in the treatment part 4.

In preferred embodiments, the cake filtration device 3 receives a blend of sludges with a specified ratio of primary sludge, digester sludge, activated sludge (if present) and coagulating substances (optional). The blended solids are preferably recirculated in the filtration device to achieve their uniform distribution over the filtration surfaces. Then the filtration cake is formed on the internal or external surfaces of multiple filter elements (referred to herein as hollow tubular members in general) with a specified flow and pressure profile, to engineer the properties of the cake and achieve the desired hydraulic and retention properties. In some preferred embodiments, the filtration cake is formed in a process with a flux providing between 50 and 100 grams of dry matter per square meter of fluid penetrable wall and so that the pressure across filtration cake and fluid penetrable wall increases from around 0 to not more than 100 milibars during the formation process.

In embodiments, where the filtration cake if formed on an external surface, the cake filtration is submerged into a basin (container) and the blend is circulated therein, e.g. by use of a stirrer/mixer and/or pumped by use of a pump.

Once the cake is ready, wastewater is introduced into the filtration device and pumped through the filtration cake, producing filtrate. When the pressure drop across the cake raises and renders further cake filtration uneconomical, the cake is removed from the filter elements by any combination of backwash, back pulsing, flow reversal, air-sparging, crossflow, chemical cleaning agents and mechanical means. Filtrate from the cake filtration device is removed from the filtration device and subjected to further treatment.

In the following "hollow tubular member(s)" is referred to in pluralism form; however, the invention is not limited to embodiments having more than one hollow tubular member.

Reference is made to figure 1 schematically illustrating a process for filtering wastewater 1. As illustrated, inflowing wastewater is split into two streams, one flowing into a primary clarifier 2 in which some matter settles at the lower part of the clarifier and forms primary sludge 14. The wastewater at the upper part of the clarified 2 is still considered to be wastewater although thinned compared to the incoming wastewater 1. The thereby thinned wastewater is mixed into the main stream of wastewater 2 and flows into the filtration device 3.

It is noted that the clarification step is advantageous since it produces material from which the filtration cake is partly made, but material for the filtration cake can be provided in other manners whereby the primary clarification step may be omitted.

A process according to the invention makes use of more through flow hollow tubular members 10 (see e.g. fig. 2) having a fluid penetrable wall 11 being configured for supporting a filtration cake 12 on the inside or outside of the wall. Such hollow tubular member 10 are arranged inside the filtration device in manner that will be disclosed in greater details below.

A process for filtering wastewater typically comprises two separate mode of operation, namely a mode of forming the filtration cake and a mode of filtering wastewater by use of the formed filtration cake.

The forming of the filtration cake 12 can be on the inside or on the outside of the wall of the hollow tubular member and comprises a step of feeding a blend 16 comprising digester sludge 15 and at least one of primary sludge (14), activated sludge and coagulating substances into the interior of the hollow tubular member(s) 10 or exposing the exterior of said hollow tubular member(s) 10 to said blend 16.

In order to form the filtration cake, a pressure difference between the interior and exterior of the hollow tubular members 10 is provided. The pressure difference is of sufficient magnitude to provide a permeation out or in through the fluid penetrable walls 11 and a deposition of solids contained in the blend on the inside or on the outside of said wall. Thus, the pressure forces liquid and solids substances towards the surface of the fluid penetrable wall 11, and the fluid penetrable walls are provided with openings arresting solids having a size above a preselected size whereby such solids are deposited on the surface.

The formation of the cake may further comprise a step of compressing the filtration cake by temporarily increasing the pressure difference.

After the filtration cake 12 has been formed, the filtering can commence. This typically comprises feeding wastewater into the interior of said hollow tubular members 10 if the filtration cake 12 is formed on the inside of the hollow tubular members 10. If the filtration cake is formed on the outside of the hollow tubular members 10, the wastewater to be filtered is arranged to surround the exterior of said hollow tubular members. In the latter case, this could be provided by encasing the hollow tubular members in a container as disclosed below.

In order to force the wastewater to filtered to go through the filtration cake, the pressure in the wastewater is made higher than the pressure at the exterior or interior of the hollow tubular members 10 to provide a permeation through the filtration cake 12 and the fluid penetrable walls 11 thereby providing filtrate of said wastewater. It is noted that this can be achieved by pressurizing the wastewater, providing a suction or a combination thereof.

It is noted that the hollow tubular members 10 typically are encased in a container (not illustrated) providing a void outside hollow tubular members 10 allowing collection of filtrated wastewater when the filtration cake is provided on the inside of the hollow tubular member, and for containing the blend and wastewater outside the hollow tubular members when the filtration cake is provided on the outside of the hollow tubular members 10.

In a preferred embodiment, the feeding of the blend 16 and providing said pressure difference are carried out as separate steps subsequent to each other starting with the feeding of said blend 16. However, providing of the pressure difference and feeding the blend 16 can be combined into one action where the feeding is pressurized to provide a deposition.

It is often preferred that the filtration cake has a uniform or substantial uniform filtration characteristic along the length and the perimeter of the hollow tubular members 10 and to accomplish that, the feeding of the blend 16 may comprise recirculation of said blend 16 inside or outside the hollow tubular members 10, so as to uniformly fill or surround the hollow tubular members 10 with said blend. By uniformly is typically meant that the solids contained in the blend are spatially uniformly (or substantially uniformly) distributed.

In embodiments, wherein the filtration cake is formed on the inside, the providing of a pressure difference can effectively be provided by feeding said blend into the hollow tubular members 10 at one end thereof and by restricting such as preventing said blend from flowing out of the hollow tubular members 10 at a distal end thereto. As will be further disclosed below, the hollow tubular members 10 are typically assembled into an array with distribution pipes leading fluid the hollow tubular members 10 and in such embodiments, the restricting or preventing the blend to flow out may be provided by suitable valves arranged to close or restrict outflow from one more of such distribution pipes.

Similarly, where the filtration cake is formed on the inside, the feeding of wastewater may further comprise feeding the wastewater into the hollow tubular members 10 at one end thereof and restricting such as preventing said wastewater from flowing out of hollow tubular members 10 at a distal end thereto.

It has been found in connection with the present invention that the blend of primary sludge 14 and digester sludge 15 advantageously is a blend composed of between 30 wt. % primary sludge and 70 wt. % digester sludge and 70 wt. % primary sludge and 30 wt. % digester sludge, preferably 50 wt. % primary sludge 50 wt. % digester sludge, where wt. % refers to the weight of dry matter. Besides comprising primary sludge 14 and digester sludge 15, the blend may further comprise activated sludge (if present in the system) and coagulating substances.

After some filtration, the filtration cake typically needs to be renewed (removed and a new filtration cake formed) since it becomes loaded with matter during the filtration. A process according to the present invention therefore typically comprises removal of the filtration cake 12. Once removed, a new filtration cake can be provided as disclosed herein.

Removal of filtration cake can be performed in a number of ways, such as:
- back-washing, in which the flow through wall of the hollow tubular members is reversed relatively to the filtration, whereby the cake material will be loosened from the surface;
- back-pulsing, in which the flow through the wall of the hollow tubular members is reversed in a pulsed manner; typically, this is done by fast acting valves to provide a water hammering effect;
- air-sparging in which air bubble (or gas bubbles) are introduced to tear-off filtration cake material, and preferably also go through the openings of the fluid penetrable walls;
- cross flow in which a flow is provided in a direction providing a shearing action of the filtration cake material;
- chemical cleaning in which a chemical is added to the fluid to soluble or chemically remove the filtration cake material;
- mechanical removal, such as by scrapping of the filtration cake;

Combinations of the above may also be applied in connection with the present invention.

To monitor the filtration process, monitoring the pressure drop across the filtration cake provides a good indication on the state of the filtration cake in order to be able to identify when the filtration cake is loaded to an extent where it no longer function as a filter, e.g. be so loaded that the amount of filtrated produced has dropped to a level where the filtration cake is to be renewed. To this, the process includes monitoring the pressure drop across the filtration cake 12 and removing the filtration cake when said pressure drop exceed a preselected level. And, providing a new filtration cake if further filtration according to the concept of the invention is desired.

Reference is made figures 2- 5; please note that in figures 2-4 the flow arrows relates to different mode of operation as noted in the caption. In certain preferred embodiments, the process according to the invention utilizes at least one array 17 comprising a plurality of said hollow tubular members 10. The figures 2-5 illustrates flows in a mode of operation in which the filtration cake 12 is made on the inside of the hollow tubular members 10.

Further, in fig. 2 left hand side, a close-up of section of a hollow tubular member 10 is shown and the right hand side illustrates three array 17 each comprising three hollow tubular members 10. In addition, the figures are not to be construed as limiting the invention to other configurations and each array may comprise different numbers of hollow tubular members. A single array is illustrated in fig. 5.

As illustrated, hollow tubular members 10 in an array 17 is fluidic connected at their longitudinal ends to a first fluid distributor pipe 18a, 18b to form a parallel configuration, so that fluid may flow into said hollow tubular members 10 at one end thereof via one of the first fluid distributors pipes 18a and out of the hollow tubular member 10 at and end being distal thereto and into the other of the first fluid distributor pipes 18b, or vice versa.

The feeding of blend is illustrated in fig. 3, and the feeding of wastewater during filtration is shown in fig. 4. Such feedings of blend or wastewater into the interior of the hollow tubular members 10 is provided by feeding said blend or wastewater into one of the first fluid distributor pipes 18a, 18b. It is noted that the feed of blend may be into distributor pipe 18b and the feed of wastewater may be into distributor pipe 18a, although the figures suggest that the flow direction is equal for both types of fluid.

To provide a uniform filtration characteristic (as discussed above) the hollow tubular members should be uniformly filled during the feeding of the blend, by providing an inflow of the blend into the hollow tubular members 10 through one of the first fluid distributor pipes 18b and providing an outflow of said blend out from the hollow tubular members 10 and into the other of the first fluid distributor pipes 18a.

The pressure difference may advantageously be provided by providing an inflow of said blend into the hollow tubular members 10 through one of the first fluid distributor pipes 18b and restricting, such as preventing said blend from flowing out from the other of the first fluid distributor pipes 18a. This may be provided by arranging controllable shut-off valves to control the outflow from one of the distributor pipes 18.

During filtering, wastewater is fed into one of said first distributor pipes 18b and the wastewater is restricted such as prevented from flowing out from the other of the first distributor pipes (18a). Thereby, the wastewater is filtered through the filtration cake 12.

As also illustrated in fig. 2-4, a process according to the invention may make use of a plurality of arrays 17. Such arrays 17 are fluidic connected in a parallel configuration with one of the first fluid distribution pipes 18a of each array 17 being fluidic connected to a single second distributor pipe 19a; and another of the first fluid distribution pipes 18b being fluidic connected to another single second distribution pipe 19b. In such a configuration, fluid (blend wastewater etc.) can flow through one of the second distributor pipes 19b and be distributed in the arrays 17 in parallel and collected in the other one of the second distributor pipes 19a, or vice versa. Thus, in a process according to the invention feeding of said blend or wastewater into the interior of the hollow tubular members 10 is provided by feeding the blend or wastewater into one of the second fluid distributor pipes 19a, 19b.

Although the above disclosure has focused on the blend being made-up from primary sludge and digester sludge, the blend of primary sludge 14 and digester sludge 15 may further comprise activated sludge and/or coagulants.

The array 17 or the plurality of arrays may also be used in a mode of operation where the filtration cake is provided on the outside of the hollow tubular members, in which case, the filtrate goes into the interior of the hollow tubular members and the blend and wastewater is surrounding the exterior of the hollow tubular members 10. In such cases, the array - or plurality of arrays - is encapsulated in a casing as disclosed above.

As disclosed above, the process may use a cake filtration device as disclosed herein and such device will now be described in greater details.

A cake filtration device 1 typically has one or more through flow hollow tubular members 10 having a fluid penetrable wall 11 being configured for supporting a filtration cake 12 on the inside or on the outside of the wall. Such hollow tubular members 10 are in some embodiment cylindrically shaped tubes being open at both end and where through going openings are provided in the wall of each hollow tubular member 10. By through going opening is meant they extend from the inside to the outside to allow fluid to go through the wall. The size of the openings are selected so as to arrest solids having a size above a certain size, preferably above 25 micron, such as above 15 micron, such as above 10 micron, preferably above 5 micron.

In some embodiment, the hollow tubular members 10 are provided by a net arranged on a support structure in which case, the mesh size are selected to arrest solids with a size above the certain size.

The cake filtration device 1 is being configured for selectively feeding a blend 16 comprising digester sludge (15) and at least one of primary sludge (14), activated sludge and coagulating substances, and wastewater into the interior of the hollow tubular members 10 or to expose the exterior of said hollow tubular members 10. By configured to is typically meant that the cake filtration device 1 is connected to the source of blend or wastewater by controllable valves and switches allowing the system to be configured to feed blend or wastewater into the device 1

The cake filtration device 1 is further configured to providing a pressure difference between the interior and exterior of the hollow tubular members 10 of sufficient magnitude to provide a permeation out or in through the fluid penetrable walls 11 and a deposition of solids contained in the blend 16 on the inside or on the outside of said wall so as to forming a filtration cake 12, and a permeation through the filtration cake 12 and the fluid penetrable walls 11 thereby providing filtrate of said wastewater. Such a configuration may be provided by a combination of a pump feeding the fluid and valves arranged to provide a counter pressure against the fluid flow.

The device is typically configured to carry out the step feeding of the blend and the step providing said pressure difference as separate steps subsequent to each other starting with the feeding of said blend 16. Also in this case, such configuration may be provided by controlling pump and valves so that valve arranged to restrict or prevent flow out from the filtration device is open for flow during the feeding step and closed either partly or fully while the pump pumps feed into the device.

The filtration device may be configured to recirculating the blend 16 inside or outside the hollow tubular members 10, preferably to uniformly fill or surround the hollow tubular members 10 with said blend. This may be accomplished by arranging the hollow tubular member in a closed loop configuration wherein the blend is recirculated.

A cake filtration device according to any of the preceding claims D1-D3, wherein the cake filtration device is configured for providing a filtration cake on the inside of the hollow tubular members 10 by feeding the blend into the interior of the hollow tubular member, and wherein the device is configured for providing of a pressure difference by having an inlet for feeding the blend into the hollow tubular members at one end thereof and by restricting such as preventing, e.g. by use of valves, the blend from flowing out of the hollow tubular members 10 at a distal end thereto.

In embodiments where the cake filtration is configured for providing a filtration cake on the inside of the hollow tubular members 10, the device is typically configured for feeding the wastewater into the hollow tubular members 10 at one end thereof and restricting such as preventing, e.g. by use of valves, the wastewater from flowing out of hollow tubular members 10 at a distal end thereto.

The blend is typically selected in the ranges of primary sludge 14 and digester sludge 15 composed of between 30 wt % primary sludge and 70 wt. % digester sludge and 70 wt. % primary sludge and 30 wt % digester sludge, preferably 50 wt. % primary sludge (14) 50 wt. % digester sludge (15), where wt % is based on the dry matter content. This may be provided by controlling by use of pumps and valves the flow of fluids into a mixing point.

As it may be preferred to remove the filtration, a filtration device may comprise cake removal means selected from one or more (or a combination thereof) of:
- a back-washing device;
- a back-pulsing device;
- an air-sparging device;
- a cross flow device;
- a chemical cleaning device;
- a mechanical remover device, such as a mechanical scrapper;

A back-washing device is typically a device being adapted to feed a flow of fluid "backwards" into the hollow tubular members 10, where backwards refers to the flow direction being reversed compared to the flow direction of the wastewater during filtration (e.g. in-side out during filtration is reversed to outside-in during backwashing). This is typically embodied by using switches and valves arranged so as to control the flow directions.

Back-pulsing device is typically a back-washing device wherein the backward flow is pulsed by varying the pressure in the fluid used for back-washing, preferably to produce a liquid(water) hammering effect.

An air-sparging device is typically a device adapted to generate and intro air - or in general gas - bubbles into the filtration device. The air bubbles are introduced in the filtration device in a manner where they rise due to buoyancy forces in a movement causing a rupture of the filtration cake. Suitable bubble generators are elements having small openings through which the air/gas may leave the generator as bubbles.

A cross-flow device is typically a device producing a flow of fluid in a direction providing a shearing action of the filtration cake material to loosen and remove the filtration cake material.

A chemical cleaning device is typically a device dosing into the cake filtration device one or more chemicals capable of chemically loosen and remove the filtration cake material.

A mechanical remover device, such as a mechanical scrapper, is typically one or more mechanically movable elements which is brought in contact with the filtration cake to push and/or scrape off the filtration cake.

Pressure sensors are preferably arranged in the cake filtration device for monitoring the pressure drop across the filtration cake 12. Such pressure sensors can be arranged e.g. in tubes feeding wastewater to be filtered into the hollow tubular members 10 and in tubes leading filtrate out from the filtration device. The pressure sensors are typically used to determine if the pressure drop exceed a threshold indicating that the filtration cake is to be renewed.

Reference is made to fig. 5 illustrating an array 17 having a plurality of hollow tubular members 10 (in fig. 5 three hollow tubular members are shown, but an array may comprise less or more). In certain embodiments, the cake filtration device has at least one such array 17 each array has a plurality of the hollow tubular members 10. The hollow tubular members 10 being fluidic connected at their longitudinal ends to a first fluid distributor pipe 18a, 18b to form a parallel configuration, so that fluid may flow into said hollow tubular members (10) at one end thereof via one of the first fluid distributors pipes 18a and out of the hollow tubular member 10 at and end being distal thereto and into the other of the first fluid distributor pipes 18b, or vice versa.

The first fluid distributor pipes 18a, 18b are typically cylindrically shaped with a number of longitudinally arranged openings which mate the openings at the ends of the hollow tubular members. The rims of ends of the hollow tubular members are attached (by welding gluing or other suitable technique) to the first distributor pipes 18a, 18b in positions encircling the openings provided in the first distributor pipes 18a, 18b.

The dimensions of the fluid distributor pipes 18a, 18b are selected so as to on one hand keep the flow at a relatively low Reynolds number while at the same time assuring that the volume flow in the fluid distribution pipe meet the requirements as to throughput (in m3/h e.g. 5-20 mm); the internal diameter of the filter tubes (hollow tubular members) is typically selected so as to make sure the dry matter content of spent cake is high upon cake removal, i.e. the ratio of solids dry matter to the volume of liquid upon solids resuspension is high.

Since the flow is to be distributed from one of the fluid distribution pipe say 18b to the hollow tubular members 10 and collected by the other fluid distribution pipe say 18a, the first fluid distributor pipes 18a, 18b are fluidic closed at one end. This closing can be a permanent closure where for instance the end is sealed by welding or it can be a closable closing e.g. in the form of a valve which may be preferred in order to allow for fluid to flow out.

In some preferred embodiments, the device is configured for having an inflow of the blend into the hollow tubular members 10 through one of the first fluid distributor pipes 18b and having an outflow of said blend out from the hollow tubular members 10 and into the other of the first fluid distributor pipes 18a. With reference to fig. 5, the blend flows in such situations into fluid distributor pipe 18b at one end (the other end is typically closed), into the hollow tubular members from where it flows into the other of the fluid distribution pipes 18a. The other fluid distribution pipe 18a is also typically closed at one end whereby the blend flows out of the other fluid distribution pipe 18a at one end thereof.

As disclosed herein, it may be preferred to recirculate blend in the hollow tubular members 10 and this can be used by recirculating the blend flowing out from one of the fluid distribution pipe say 18a and feeding it into the other fluid distribution pipe 18b. It is noted that the amount of blend available may be larger than the volume the filtration unit can hold, and in such situations, the blend may be contained in a storage and extracted therefrom by a pump and fed into the filtration unit; and blend flowing out from the filtration unit may be fed into the storage.

As illustrated in fig. 4 e.g. the wastewater to be filtered enters into the filtration device where the filtration is operated in what can be termed a dead-end filtration mode. That is the wastewater is fed into the interior of the hollow tubular members 10 at one end thereof and are restricted and even prevented from flowing out of the hollow tubular members 10 at the opposite end thereof. Thereby, wastewater will be filtrated through the filtration cake producing a filtrate. To this, the cake filtration device has selective flow restricting means, such as controllable valves, arranged to restricted such as prevent fluid from flowing out from one of the first fluid distributor pipes 18a. Selectively is preferably used to mean that e.g. the controllable valves may be selectively open and closed.

As illustrated in figures 2-4 a plurality of arrays 17 may be arranged in a parallel configuration by one of the first fluid distribution pipes 18a of each array being fluidic connected to a single second distributor pipe 19a, and another of the first fluid distribution pipes 18b being fluidic connected to another single second distribution pipe 19b,
so that fluid may flow through one of the second distributor pipe 19b and be distributed in the arrays 17 and collected in the other one of the second distributor pipes 19a, or vice versa.

If fluid is to be restricted such as prevented from flowing out of one of the first distributor pipes (e.g. 18a - as disclosed above), this can be achieved by restricting such as preventing fluid from flowing out of one of the second distributor pipes, 19a e.g.

Reference is made to fig. 5 schematically illustrating an array 17 having a plurality one or more through flow hollow tubular members 10 each having a fluid penetrable wall 11 being configured for supporting a filtration cake 12 on the inside or on the outside of the wall. As illustrated, the array 17 comprising two first fluid distributor pipes 18a, 18b and the hollow tubular members 10 being fluidic connected at their longitudinal ends to one of the first fluid distributor pipe 18a, 18b to form a parallel configuration, so that fluid may flow into the hollow tubular members 10 at one end thereof via one of the first fluid distributors pipes 18a and out of the hollow tubular member 10 at and end being distal thereto and into the other of the first fluid distributor pipes 18b, or vice versa, and wherein the first fluid distributor pipes (18a, 18b) preferably are fluidic closed at one end or comprising a valve at one end.

With reference to e.g. fig. 2, a plurality of arrays as disclosed in fig. 5 may be combined so that the plurality of arrays 17 being fluidic connected in a parallel configuration with
- one of the first fluid distribution pipes 18a of each array being fluidic connected to a single second distributor pipe 19a, and
- another of the first fluid distribution pipes 18b being fluidic connected to another single second distribution pipe 19b,
so that fluid may flow through one of the second distributor pipe 19b and be distributed in the arrays 17 and collected in the other one of the second distributor pipes 19a, or vice versa.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### List of reference symbols used:

- 1: Wastewater treatment plant
- 2: Primary clarifier
- 3: Cake filtration device
- 4: Treatment part
- 5: Digester
- 6: Filtered wastewater
- 10: Hollow tubular member
- 11: Fluid penetrable wall
- 12: Filtration cake
- 13: Spend cake material
- 14: Primary sludge
- 15: Digester sludge
- 16: Blend of primary sludge and digester sludge
- 17: Array of hollow tubular members
- 18: First fluid distributor pipe
- 19: Second fluid distributor pipe

## Claims

1. A process for filtering wastewater (1)
- the process utilizes one or more through flow hollow tubular members (10) having a fluid penetrable wall (11) being configured for supporting a filtration cake (12) on the inside or outside of the wall;
the process comprising
- forming a filtration cake (12) on said inside or said outside of the wall by:
- feeding a blend (16) comprising digester sludge (15) and at least one of primary sludge (14), activated sludge and coagulating substances into the interior of the hollow tubular member(s) (10) or exposing the exterior of said hollow tubular member(s) (10) to said blend (16), and
- providing a pressure difference between the interior and exterior of the hollow tubular member(s) (10) of sufficient magnitude to provide a permeation out or in through the fluid penetrable wall(s) (11) and a deposition of solids contained in the blend on the inside or on the outside of said wall, and
subsequently to the forming the filtration cake (12):
- feeding wastewater, such as raw or screened wastewater, into the interior of said hollow tubular member(s) (10) if the filtration cake (12) is formed on said inside, or to surround the exterior of said hollow tubular member(s) if the filtration cake (10) is formed on said outside, where the pressure in the wastewater is higher than the pressure at the exterior or interior of the hollow tubular member(s) (10) to provide a permeation through the filtration cake (12) and the fluid penetrable wall(s) (11) thereby providing filtrate of said wastewater.

2. A process according to claim 1, wherein the feeding of said blend (16) comprising recirculation of said blend (16) inside or outside the hollow tubular member(s) (10), preferably to uniformly fill or surround the hollow tubular member(s) (10) with said blend.

3. A process according any of the preceding claims 1 or 2, wherein the blend of primary sludge (14) and digester sludge (15) is a blend composed of between 30 wt. % primary sludge and 70 wt. % digester sludge and 70 wt. % primary sludge and 30 wt. digester sludge, preferably 50 wt.% primary sludge(14) 50 wt. % digester sludge (15), where wt. % is the based on the dry matter content.

4. A process according to any of the preceding claims, wherein the process further comprising removal of the filtration cake (12) and wherein the removal of filtration cake is provided by providing one or more, or a combination thereof, of:
- back-washing;
- back-pulsing;
- air-sparging;
- cross flow;
- chemical cleaning;
- mechanical removal, such as by scrapping of the filtration cake;

5. A process according to any of the preceding claims, wherein the process further comprising monitoring the pressure drop across the filtration cake (12) and removing the filtration cake when said pressure drop exceed a preselected level.

6. A process according to any of the preceding claims,
- wherein the process utilizes at least one array (17) comprising a plurality of said hollow tubular members (10), in which array (17) said hollow tubular members (10) being fluidic connected at their longitudinal ends to a first fluid distributor pipe (18a, 18b) to form a parallel configuration, so that fluid may flow into said hollow tubular members (10) at one end thereof via one of the first fluid distributors pipes (18a) and out of the hollow tubular member (10) at and end being distal thereto and into the other of the first fluid distributor pipes (18b), or vice versa, and
- wherein said feeding of said blend or wastewater into the interior of the hollow tubular members (10) is provided by feeding said blend or wastewater into one of the first fluid distributor pipes (18a, 18b).

7. A process according to claim 6, wherein the process further comprising during said feeding of said blend, providing an inflow of said blend into the hollow tubular members (10) through one of the first fluid distributor pipes (18b) and providing an outflow of said blend out from the hollow tubular members (10) and into the other of the first fluid distributor pipes (18a).

8. A process according to any of claims 6 or 7, wherein the process utilizes a plurality of said arrays (17), said arrays (17) being fluidic connected in a parallel configuration with
- one of the first fluid distribution pipes (18a) of each array being fluidic connected to a single second distributor pipe (19a), and
- another of the first fluid distribution pipes (18b) being fluidic connected to another single second distribution pipe (19b),
so that fluid may flow through one of the second distributor pipes (19b) and be distributed in the arrays (17) in parallel and collected in the other one of the second distributor pipes (19a, or vice versa, and wherein said feeding of said blend or wastewater into the interior of the hollow tubular members (10) is provided by feeding said blend or wastewater into one of the second fluid distributor pipes (19a, 19b).

9. A process according any of preceding claims, wherein the blend of primary sludge (14) and digester sludge (15) further comprises activated sludge and/or coagulants.

10. A cake filtration device (1) comprising
- one or more through flow hollow tubular members (10) having a fluid penetrable wall (11) being configured for supporting a filtration cake (12) on the inside or on the outside of the wall;
the cake filtration device (1) being configured for
- selectively feeding
- a blend (16) comprising digester sludge (15) and at least one of primary sludge (14), activated sludge and coagulating substances, and
- wastewater;
into the interior of the hollow tubular member(s) (10) or to expose the exterior of said hollow tubular member(s) (10),
- providing a pressure difference between the interior and exterior of the hollow tubular member(s) (10) of sufficient magnitude to provide
- a permeation out or in through the fluid penetrable wall(s) (11) and a deposition of solids contained in the blend (16) on the inside or on the outside of said wall so as to forming a filtration cake (12), and
- a permeation through the filtration cake (12) and the fluid penetrable wall(s) (11) thereby providing filtrate of said wastewater.

11. A cake filtration device according to claim 10
- wherein the cake filtration device comprises at least one array (17) having a plurality of said hollow tubular members (10), in which array (17) said hollow tubular members (10) being fluidic connected at their longitudinal ends to a first fluid distributor pipe (18a, 18b) to form a parallel configuration, so that fluid may flow into said hollow tubular members (10) at one end thereof via one of the first fluid distributors pipes (18a) and out of the hollow tubular member (10) at and end being distal thereto and into the other of the first fluid distributor pipes (18b), or vice versa, and
- wherein the first fluid distributor pipes (18a, 18b) preferably are fluidic closed at one end.

12. A cake filtration device according to claim 11, wherein the device is configured for having an inflow of said blend into the hollow tubular members (10) through one of the first fluid distributor pipes (18b) and having an outflow of said blend out from the hollow tubular members (10) and into the other of the first fluid distributor pipes (18a).

13. A cake filtration device according to any of claims 10-12, wherein the device comprises a plurality of said arrays (17), said arrays (17) being fluidic connected in a parallel configuration with
- one of the first fluid distribution pipes (18a) of each array being fluidic connected to a single second distributor pipe (19a), and
- another of the first fluid distribution pipes (18b) being fluidic connected to another single second distribution pipe (19b),
so that fluid may flow through one of the second distributor pipe (19b) and be distributed in the arrays (17) and collected in the other one of the second distributor pipes (19a), or vice versa.

14. An array (17) having a plurality one or more through flow hollow tubular members (10) each having a fluid penetrable wall (11) being configured for supporting a filtration cake (12) on the inside or on the outside of the wall, said array comprising two first fluid distributor pipes wherein said hollow tubular members (10) being fluidic connected at their longitudinal ends to one of the first fluid distributor pipe (18a, 18b) to form a parallel configuration, so that fluid may flow into said hollow tubular members (10) at one end thereof via one of the first fluid distributors pipes (18a) and out of the hollow tubular member (10) at and end being distal thereto and into the other of the first fluid distributor pipes (18b), or vice versa, and wherein the first fluid distributor pipes (18a, 18b) preferably are fluidic closed at one end.

15. A plurality of arrays comprising a plurality of arrays according to claim 15, said arrays (17) being fluidic connected in a parallel configuration with
- one of the first fluid distribution pipes (18a) of each array being fluidic connected to a single second distributor pipe (19a), and
- another of the first fluid distribution pipes (18b) being fluidic connected to another single second distribution pipe (19b),
so that fluid may flow through one of the second distributor pipe (19b) and be distributed in the arrays (17) and collected in the other one of the second distributor pipes (19a), or vice versa.
